# EUROPÄISCHE PATENTSCHRIFT

(11) **EP 3 237 879 B1**
(45) Veröffentlichungstag und Bekanntmachung des Hinweises auf die Patenterteilung: **03.02.2021**
(21) Anmeldenummer: 15812990.8
(22) Anmeldetag: 07.12.2015
(51) Int. Cl.: G01N 15/06, F02D 41/14

(54) **SENSOR ZUR DETEKTION VON RUSSPARTIKEL UND VERFAHREN ZUR HERSTELLUNG EINES DERARTIGEN SENSORS**
SENSOR FOR DETECTING SOOT PARTICLES AND METHOD FOR ADJUSTING SUCH A SENSOR
CAPTEUR DE DÉTECTION DE PARTICULES DE SUIE ET PROCÉDÉ DE RÉGLAGE D'UN TEL CAPTEUR

(30) Priorität: 23.12.2014 DE 102014119484
(43) Veröffentlichungstag der Anmeldung: 01.11.2017
(73) Patentinhaber: Heraeus Nexensos GmbH, 63801 Kleinostheim (DE)
(72) Erfinder: WIENAND, Karlheinz, 63741 Aschaffenburg (DE); DIETMANN, Stefan, 63755 Alzenau (DE); ASMUS, Tim, 35469 Allendorf-Winnen (DE)
(74) Vertreter: Meissner Bolte Partnerschaft mbB
(86) Internationale Anmeldenummer: PCT/EP2015/078747
(87) Internationale Veröffentlichungsnummer: WO 2016/102178

(56) Entgegenhaltungen:
- WO-A1-2005/050174
- WO-A2-2008/033419
- DE-A1-102004 043 121
- DE-A1-102008 041 808

## Beschreibung

Die Erfindung bezieht sich auf einen Sensor zur Detektion elektrisch leitfähiger und/oder polarisierbarer Partikel, insbesondere zur Detektion von Rußpartikeln. Die Erfindung betrifft des Weiteren ein Verfahren zur Herstellung eines Sensors zur Detektion elektrisch leitfähiger und/oder polarisierbarer Partikel.

Aus dem Stand der Technik sind Sensoren bekannt, die einen Sensorträger aufweisen, wobei auf diesem Sensorträger in planarer Anordnung Elektroden und Heizstrukturen angeordnet sind. In einem Detektionsbetrieb lagern sich polarisierbare und/oder elektrisch leitfähige Partikel auf dieser planaren Anordnung ab. Die abgelagerten Partikel bewirken eine Reduzierung des Widerstandes zwischen den Elektroden, wobei dieser Abfall des Widerstandes als Maß für die abgelagerte Partikelmasse herangezogen wird. Beim Erreichen eines vordefinierten Schwellwertes bezüglich des Widerstandes wird die Sensoranordnung mit den Heizstrukturen erhitzt, so dass die abgelagerten Partikel verbrannt werden und der Sensor nach dem Reinigungsvorgang für einen weiteren Detektionszyklus genutzt werden kann.

In der DE 10 2005 029 219 A1 wird ein Sensor zur Detektion von Partikeln in einem Abgasstrom von Verbrennungsmotoren beschrieben, wobei die Elektroden-, Heizer- und Temperatursensor-Strukturen in einer planaren Anordnung auf einem Sensorträger aufgebracht sind. Ein Nachteil dieser Sensoranordnung besteht darin, dass bei den zu überbrückenden Elektroden eine Mindestlänge notwendig ist, um in einen akzeptablen Empfindlichkeitsbereich beim Messen von leitfähigen oder polarisierbaren Partikeln wie z.B. Ruß gelangen zu können. Hierzu ist allerdings eine bestimmte Größe des Sensorbauelements notwendig, um die Mindestlänge für die zu überbrückenden Elektroden anordnen zu können. Dies bringt entsprechende Kostennachteile bei der Herstellung dieser Sensorbauelemente mit sich.

WO 2005/050174 A1 offenbart die Präambel des Anspruchs 1.

Der Erfindung liegt die Aufgabe zu Grunde, einen weiterentwickelten Sensor zur Detektion elektrisch leitfähiger und/oder polarisierbarer Partikel, insbesondere zur Detektion von Rußpartikeln, anzugeben, wobei der Sensor hinsichtlich seiner Größe minimiert ist, so dass die vorerwähnten Nachteile überwunden werden können.

Des Weiteren ist es die Aufgabe der vorliegenden Erfindung, ein Verfahren zur Herstellung eines derartigen Sensors anzugeben.

Erfindungsgemäß wird diese Aufgabe durch einen Sensor zur Detektion von Rußpartikeln, gemäß Anspruch 1 gelöst. Im Hinblick auf das Verfahren wird die Aufgabe durch die Merkmale des Anspruches : 9 oder durch die Merkmale des Anspruches 15 gelöst.

Vorteilhafte und zweckmäßige Ausgestaltungen des erfindungsgemäßen Sensors bzw. des erfindungsgemäßen Verfahrens zur Herstellung eines derartigen Sensors sind in den Unteransprüchen angegeben.

Die Erfindung beruht auf dem Gedanken, einen Sensor zur Detektion elektrisch leitfähiger und/oder polarisierbarer Partikel, insbesondere zur Detektion von Rußpartikel, anzugeben, umfassend ein Substrat, eine erste Elektrodenschicht und eine, zwischen dem Substrat und der ersten Elektrodenschicht angeordnete, zweite Elektrodenschicht, wobei zwischen der ersten Elektrodenschicht und der zweiten Elektrodenschicht eine Isolationsschicht ausgebildet ist und in der ersten Elektrodenschicht und in der Isolationsschicht jeweils mindestens eine Öffnung ausgebildet ist, wobei die Öffnung der ersten Elektrodenschicht und die Öffnung der Isolationsschicht zumindest abschnittsweise derart übereinander angeordnet sind, dass mindestens ein Durchgang zur zweiten Elektrodenschicht gebildet ist.

Mit anderen Worten wird ein Sensor zur Verfügung gestellt, wobei eine erste und eine zweite Elektrodenschicht horizontal übereinander angeordnet sind und zwischen den beiden Elektrodenschichten eine Isolationsschicht ausgebildet ist. Um einen Durchgang zur zweiten Elektrodenschicht zu bilden, so dass zu detektierende Partikel, insbesondere Rußpartikel, mit Hilfe des Durchgangs zur zweiten Elektrodenschicht gelangen können, weisen sowohl die erste Elektrodenschicht als auch die Isolationsschicht jeweils mindestens eine Öffnung auf, wobei die Öffnung der ersten Elektrodenschicht und die Öffnung der Isolationsschicht zumindest abschnittsweise übereinander angeordnet sind, so dass der Durchgang gebildet ist oder bildbar ist.

Partikel können demnach lediglich von einer Seite des Sensors aus, nämlich von der Seite des Sensors aus, die der ersten Elektrodenschicht am nächsten zugeordnet ist, über mindestens einen Durchgang zur zweiten Elektrodenschicht gelangen. Die elektrisch leitfähigen und/oder polarisierbaren Partikel liegen demnach auf einem Abschnitt der zweiten Elektrodenschicht auf.

Vorzugsweise ist die Öffnung der ersten Elektrodenschicht mit Abstand zu dem Randbereich der ersten Elektrodenschicht und die Öffnung der Isolationsschicht mit Abstand zu dem Randbereich der Isolationsschicht ausgebildet ist. Die Öffnungen sind demnach vorzugsweise nicht randlagig bzw. nicht an den Seitenrändern der betreffenden Schichten ausgebildet.

Die erste Elektrodenschicht und die zweite Elektrodenschicht sind durch die dazwischen befindliche Isolationsschicht voneinander isoliert. Aufgrund eines derartigen Aufbaus kann ein sehr empfindlicher bzw. sensitiver Sensor gebildet werden, der im Vergleich zu Sensoren des Standes der Technik eine geringere Baugröße aufweist.

Die zweite, vorzugsweise flächig ausgebildete, Elektrodenschicht ist mittelbar oder unmittelbar mit dem Substrat verbunden. Ein mittelbares Verbinden der zweiten Elektrodenschicht mit dem Substrat kann beispielsweise mittels einer Haftvermittlerschicht erfolgen. Zwischen der zweiten Elektrodenschicht und dem Substrat kann eine Haftvermittlerschicht ausgebildet sein. Die Haftvermittlerschicht kann beispielsweise aus einem Aluminiumoxid (Al₂O₃) oder einem Siliziumdioxid (SiO₂) bestehen. Die Haftvermittlerschicht ist vorzugsweise sehr dünn ausgebildet und weist folglich lediglich eine geringe Dicke auf.

Die Isolationsschicht kann eine Dicke von 0,5 µm, insbesondere von 1,0 µm bis 40 µm, insbesondere von 5,0 µm bis 30 µm, insbesondere von 7,5 µm bis 20 µm, insbesondere von 8 µm bis 12 µm, aufweisen. Mit Hilfe der Dicke der Isolationsschicht wird der Abstand der ersten Elektrodenschicht zur zweiten Elektrodenschicht eingestellt. Die Empfindlichkeit des Sensors kann durch Verringerung des Abstandes der übereinander befindlichen, flächigen Elektrodenschichten erhöht werden. Je geringer die Dicke der Isolationsschicht ausgebildet ist, desto empfindlicher bzw. sensitiver ist der Sensor ausgebildet.

Die Isolationsschicht kann aus Aluminiumoxid (Al₂O₃) oder Siliziumdioxid (SiO₂) oder Magnesiumoxid (MgO) oder Siliziumnitrid (Si₂N₄) oder Glas gebildet sein.

Vorzugsweise ummantelt die Isolationsschicht die zweite Elektrodenschicht seitlich. Mit anderen Worten kann die Isolationsschicht die Seitenflächen der zweiten Elektrodenschicht derart abdecken, dass die zweite Elektrodenschicht seitlich isoliert ist.

Die erste Elektrodenschicht und/oder die zweite Elektrodenschicht ist aus Metall oder einer Legierung, insbesondere aus einem hochtemperaturfesten Metall oder einer hochtemperaturfesten Legierung, besonders bevorzugt aus einem Platinmetall oder aus einer Legierung aus einem Platinmetall, gebildet. Bei den Elementen der Platinmetalle handelt es sich um Palladium (Pd), Platin (Pt), Rhodium (Rh), Osmium (Os), Iridium (Ir) und Ruthendium (Rh). Auch Unedelmetalle mit Nickel (Ni) oder Unedelmetalllegierungen wie Nickel/Chrom oder Nickel/Eisen können zum Einsatz kommen. Diese Metalle oder Legierungen aus diesen Metallen sind besonders hochtemperaturfest und eignen sich demnach zur Bildung eines Sensorelements, das zur Detektion von Rußpartikel in einem Abgasstrom von Verbrennungsmotoren eingesetzt werden kann.

In einer weiteren Ausführungsform der Erfindung ist die zweite Elektrodenschicht aus einem Metall oder einer Legierung gebildet, die eine höhere Ätzresistenz als das Metall oder die Legierung der ersten Elektrodenschicht aufweist. Dies hat den Vorteil, dass die zweite Elektrodenschicht in einem Herstellprozess als den Ätzprozess stoppende Schicht ausgebildet sein kann. Mit anderen Worten kann eine derart ausgebildete zweite Elektrodenschicht die zu ätzende Tiefe eines beispielsweise in den Sensoraufbau einzubringenden Durchgangs bestimmen. Auf der, von der Isolationsschicht abgewandten Seite der ersten Elektrodenschicht kann eine Abdeckschicht, die insbesondere aus Keramik und/oder Glas und/oder Metalloxid gebildet ist, ausgebildet sein. Mit anderen Worten ist die Abdeckschicht auf einer, zur Isolationsschicht gegenüberliegenden Seite der Elektrodenschicht ausgebildet. Die Abdeckschicht kann als Diffusionsbarriere dienen und reduziert zusätzlich ein Abdampfen der ersten Elektrodenschicht bei hohen Temperaturen, die in einem Abgasstrom beispielsweise bis zu 850 °C betragen können.

Die Abdeckschicht kann die erste Elektrodenschicht seitlich ummanteln. In einer weiteren Ausführungsform der Erfindung kann die Abdeckschicht zusätzlich die Isolationsschicht seitlich ummanteln. Mit anderen Worten können sowohl die Seitenflächen der ersten Elektrodenschicht als auch die Seitenflächen der darunter angeordneten Isolationsschicht mit der Abdeckschicht bedeckt sein. Des Weiteren ist es denkbar, dass die Abdeckschicht zusätzlich die zweite Elektrodenschicht seitlich ummantelt. Der seitliche Ummantelungsteil bzw. seitliche Ummantelungsbereich der Abdeckschicht kann demnach von der ersten Elektrodenschicht bis zur zweiten Elektrodenschicht reichen. Dies bewirkt eine seitliche Isolierung der ersten Elektrodenschicht und/oder der Isolationsschicht und/oder der zweiten Elektrodenschicht.

Auf der von der Isolationsschicht abgewandten Seite der ersten Elektrodenschicht oder auf der von der ersten Elektrodenschicht abgewandten Seite der Abdeckschicht kann zusätzlich eine poröse Filterschicht ausgebildet sein. Mit Hilfe einer derartigen porösen Filterschicht können der Anordnung von zwei übereinander angeordneten Elektrodenschichten große Partikelteile ferngehalten werden. Die Porosität der Filterschicht kann beispielsweise > 1 µm betragen. Besonders bevorzugt ist die Porosität in einem Bereich von 20 µm bis 30 µm ausgebildet. Die poröse Filterschicht kann beispielsweise aus einem keramischen Material gebildet sein. Des Weiteren ist es denkbar, dass die poröse Filterschicht aus einem Aluminiumoxidschaum gebildet ist. Mit Hilfe der Filterschicht, die auch den mindestens einen Durchgang zur zweiten Elektrodenschicht bedeckt, können die, die Messung störende große Rußpartikel von dem mindestens einen Durchgang ferngehalten werden, sodass derartige Partikel keinen Kurzschluss verursachen können.

Der mindestens eine Durchgang zur zweiten Elektrodenschicht ist als Sackloch ausgebildet, wobei ein Abschnitt der zweiten Elektrodenschicht als Boden des Sacklochs ausgebildet ist und sich das Sackloch mindestens über die Isolationsschicht und über die erste Elektrodenschicht erstreckt. Sofern der Sensor eine Abdeckschicht aufweist, erstreckt sich das Sackloch auch über diese Abdeckschicht. Mit anderen Worten weisen dann sowohl die erste Elektrodenschicht als auch die Isolationsschicht und die Abdeckschicht eine Öffnung auf, wobei diese Öffnungen derart übereinander angeordnet sind, dass diese ein Sackloch bilden, dessen Boden durch einen Abschnitt der zweiten Elektrodenschicht gebildet ist. Der Boden des Sacklochs kann beispielsweise auf der zur Isolationsschicht zugewandten oberen Seite der zweiten Elektrodenschicht ausgebildet sein. Des Weiteren ist es denkbar, dass die zweite Elektrodenschicht eine Vertiefung aufweist, die den Boden des Sackloches bildet.

Der Öffnungsquerschnitt des Sackloches wird durch die, die Öffnungen begrenzenden Randabschnitte der ersten Elektrodenschicht und der Isolationsschicht und ggf. der Abdeckschicht gebildet. Der Öffnungsquerschnitt des mindestens einen Sackloches ist quadratisch. Das Sackloch weist einen quadratischen Querschnitt mit einer Fläche von 10 x 10 µm² bis 100 x 100 µm², insbesondere von 15 x 15 µm² bis 50 x 50 µm², insbesondere von 20 x 20 µm², auf.

In einer Weiterbildung der Erfindung kann der Sensor eine Vielzahl von Sacklöchern aufweisen, wobei diese Sacklöcher wie bereits beschrieben ausgebildet sind. Des Weiteren ist es denkbar, dass mindestens zwei Sacklöcher unterschiedliche Querschnitte aufweisen, so dass ein Sensor-Array mit mehreren Feldern gebildet werden kann, bei dem mehrere Messzellen mit unterschiedlich großen Sackloch-Querschnitten verwendet werden können. Durch parallele Detektion von elektrisch leitfähigen und/oder polarisierbaren Partikel, insbesondere von Rußpartikel, können zusätzliche Informationen zur Größe der Partikel bzw. zur Größenverteilung der Partikel gewonnen werden.

In einer weiteren Ausführungsform der Erfindung ist die erste Elektrodenschicht und die Isolationsschicht jeweils porös ausgebildet, wobei die mindestens eine Öffnung der ersten Elektrodenschicht und die mindestens eine Öffnung der Isolationsschicht jeweils aus mindestens einer Pore gebildet ist, wobei die Pore der Isolationsschicht und die Pore der ersten Elektrodenschicht zumindest abschnittsweise derart übereinander angeordnet sind, dass der mindestens eine Durchgang zur zweiten Elektrodenschicht gebildet ist. Mit anderen Worten kann auf eine aktive bzw. nachträgliche Strukturierung der Durchgänge verzichtet werden, wobei die erste Elektrodenschicht und die Isolationsschicht für das zu messende Medium durchlässig ausgebildet ist.

Dies kann beispielsweise durch einen porösen bzw. grobkörnigen Aufbau der beiden Schichten ermöglicht werden. Sowohl die erste Elektrodenschicht als auch die Isolationsschicht kann durch Zusammensintern einzelner Partikel hergestellt werden, wobei Poren bzw. Hohlräume für das zu messende Medium beim Zusammensintern gebildet werden. Es muss demnach ausgehend von der Seite der ersten Elektrodenschicht, die von der Isolationsschicht abgewandt ist, bis zur Seite der zweiten Elektrodenschicht, die der Isolationsschicht zugewandt ist, aufgrund der übereinander ausgebildeten Anordnung von Poren der ersten Elektrodenschicht und der Isolationsschicht mindestens ein Durchgang gebildet sein, der einen Zugang eines zu messenden bzw. detektierenden Partikels zur zweiten Elektrodenschicht ermöglicht. Sofern der Sensor eine Abdeckschicht aufweist, ist auch diese Abdeckschicht porös auszubilden, derart, dass eine Pore der Abdeckschicht, eine Pore der ersten Elektrodenschicht und eine Pore der Isolationsschicht einen Durchgang zur zweiten Elektrodenschicht bilden.

Die Partikelgrößenverteilung der ersten Elektrodenschicht und/oder der Isolationsschicht und/oder der Abdeckschicht kann hinsichtlich der durchzuführenden Mess- oder Detektionsaufgabe optimiert werden.

Die erste Elektrodenschicht und/oder die Isolationsschicht und ggf. die Abdeckschicht kann bzw. können Abschnitte mit unterschiedlichen Porositäten aufweisen, derart, dass ein Sensor-Array mit mehreren Feldern unterschiedlicher Porositäten gebildet ist. Durch parallele Detektion mit Schichtabschnitten unterschiedlicher Porositäten kann ein "Fingerabdruck" des zu analysierenden bzw. des zu detektierenden Mediums gemessen werden. Demnach können weitere Informationen zur Größe der zu messenden Partikel bzw. zur Größenverteilung der zu messenden Partikel erlangt werden.

Die erste Elektrodenschicht und die zweite Elektrodenschicht weisen jeweils eine elektrische Kontaktierungsfläche auf, die frei von über den jeweiligen Elektrodenschichten angeordneten Sensorschichten sind und jeweils an ein Anschlusspad angeschlossen oder anschließbar sind. Die beiden Elektrodenschichten sind isoliert voneinander an Anschlusspads angeschlossen bzw. anschließbar. Es wird pro Elektrodenschicht mindestens eine elektrische Kontaktierungsfläche gebildet, die im Bereich der Anschlusspads zur elektrischen Kontaktierung freigelegt ist. Die elektrische Kontaktierungsfläche der ersten Elektrodenschicht ist frei von einer möglichen Abdeckschicht und frei von einer passiven porösen Filterschicht. Mit anderen Worten befindet sich überhalb der elektrischen Kontaktierungsfläche der ersten Elektrodenschicht weder ein Abschnitt der Abdeckschicht noch ein Abschnitt der Filterschicht.

Die elektrische Kontaktierungsfläche der zweiten Elektrodenschicht ist frei von der Isolationsschicht, der ersten Elektrodenschicht, sowie frei von einer ggf. ausgebildeten Abdeckschicht und frei von einer passiven porösen Filterschicht. Mit anderen Worten befindet sich auf der elektrischen Kontaktierungsfläche der zweiten Elektrodenschicht weder ein Abschnitt der Isolationsschicht noch ein Abschnitt der ersten Elektrodenschicht, ein Abschnitt der Isolationsschicht oder ein Abschnitt der passiven porösen Filterschicht.

In einer weiteren Ausführungsform der Erfindung weist die erste Elektrodenschicht und/oder die zweite Elektrodenschicht Leiterbahnschleifen auf, derart, dass die erste Elektrodenschicht und/oder die zweite Elektrodenschicht als Heizwendel und/oder als temperatursensitive Schicht und/oder als Schirmelektrode ausgebildet ist. Die erste Elektrodenschicht und/oder die zweite Elektrodenschicht weist mindestens eine zusätzliche elektrische Kontaktierungsfläche auf, die frei von über der Elektrodenschicht, also der ersten und/oder der zweiten Elektrodenschicht, angeordneten Sensorschichten ist und an ein zusätzliches Anschlusspad angeschlossen oder anschließbar ist. Mit anderen Worten weist die erste Elektrodenschicht und/oder die zweite Elektrodenschicht zwei elektrische Kontaktierungsflächen auf, wobei beide elektrische Kontaktierungsflächen frei von über der Elektrodenschicht angeordneten Sensorschichten sind.

Die Ausbildung von zwei elektrischen Kontaktierungsflächen auf einer Elektrodenschicht ist dann notwendig, wenn diese Elektrodenschicht als Heizwendel und/oder temperatursensitive Schicht und/oder als Schirmelektrode ausgebildet ist. Vorzugsweise weist die zweite Elektrodenschicht mindestens zwei elektrische Kontaktierungsflächen auf. Die zweite Elektrodenschicht ist vorzugsweise sowohl als Heizwendel als auch als temperatursensitive Schicht und als Schirmelektrode ausgebildet. Durch entsprechendes elektrisches Kontaktieren der elektrischen Kontaktierungsfläche kann die Elektrodenschicht entweder heizen oder als temperatursensitive Schicht bzw. Schirmelektrode fungieren. Aufgrund einer derartigen Ausbildung der Elektrodenflächen können kompakte Sensoren bereitgestellt werden, da eine Elektrodenschicht mehrere Funktionen übernehmen kann. Es sind demnach keine separaten Heizwendelschichten und/oder temperatursensitive Schichten und/oder Schirmelektrodenschichten notwendig.

Zusammenfassend kann festgestellt werden, dass bedingt durch den erfindungsgemäßen Aufbau ein sehr genau messender Sensor zur Verfügung gestellt werden kann, der wesentlich kleiner als bekannte Sensoren ist. Des Weiteren können bei der Herstellung des Sensors wesentlich mehr Einheiten auf einem Substrat oder einem Wafer ausgebildet werden. Dieser Aufbau geht somit mit einem erheblichen Kostenvorteil gegenüber normalerweise planar aufgebauten Strukturen einher.

Gemäß einem nebengeordneten Aspekt betrifft die Erfindung ein Verfahren zum Herstellen eines Sensors zur Detektion elektrisch leitfähiger und/oder polarisierbarer Partikel, insbesondere ein Verfahren zum Herstellen eines beschriebenen erfindungsgemäßen Sensors.

Das Verfahren umfasst, dass ein Schichtverbund mit einer ersten Elektrodenschicht, einer zweiten Elektrodenschicht und einer zwischen der ersten Elektrodenschicht und der zweiten Elektrodenschicht angeordneten Isolationsschicht hergestellt wird, wobei in den Schichtverbund anschließend mindestens ein Durchgang eingebracht wird, der sich über die erste Elektrodenschicht und die Isolationsschicht erstreckt, wobei der Boden des Durchgangs durch einen Abschnitt der zweiten Elektrodenschicht gebildet wird. Das Verfahren beruht auf dem Gedanken, einen Schichtverbund, der mindestens eine erste Elektrodenschicht, eine zweite Elektrodenschicht und eine Isolationsschicht umfasst, herzustellen, um in diesen Schichtverbund mindestens einen Durchgang einzubringen. Der Durchgang dient als Zugang der zu detektierenden Rußpartikeln zu der zweiten Elektrodenschicht.

Die Herstellung der Schichtverbunds und/oder der einzelne Schichten des Schichtverbundes kann durch eine Dünnschichttechnik oder eine Dickschichttechnik bzw. einer Kombination aus diesen Techniken erfolgen. Im Rahmen einer anzuwendenden Dünnschichttechnik kann ein Aufdampfverfahren oder vorzugsweise ein Kathodenzerstäubungsverfahren gewählt werden. Im Rahmen eines Dickschichtverfahrens ist insbesondere ein Siebdruckverfahren denkbar. Die Isolationsschicht und/oder eine Abdeckschicht, die auf der von der Isolationsschicht abgewandten Seite der ersten Elektrodenschicht ausgebildet ist, kann durch eine chemische Gasphasenabscheidung (CVD-Prozess) oder eine plasmaunterstützte chemische Gasphasenabscheidung (PECVD-Prozess) gebildet werden.

Die Isolationsschicht kann derart hergestellt werden, dass diese die zweite Elektrodenschicht seitlich ummantelt. Eine optional vorhandene Abdeckschicht kann ebenfalls derart hergestellt werden, dass diese die erste Elektrodenschicht und/oder die Isolationsschicht und/oder die zweite Elektrodenschicht seitlich ummantelt. Demnach können sowohl die Isolationsschicht als auch die Abdeckschicht eine zusätzliche seitliche Ummantelung bilden.

Der Durchgang wird als Sackloch ausgebildet, wobei das mindestens eine Sackloch oder ein Teilabschnitt des Sacklochs durch mindestens ein Ätzverfahren, insbesondere durch ein Plasma-Ionen-Ätzverfahren, oder durch mehrere nacheinander durchgeführte Ätzverfahren, die auf die jeweils zu ätzende Schicht des Schichtverbunds angepasst ist, in den Schichtverbund eingebracht wird. Mit anderen Worten kann ein Sackloch derart in den Schichtverbund eingebracht werden, dass beispielsweise für jede zu durchdringende bzw. zu ätzende Schicht ein für diese Schicht optimales Ätzverfahren angewendet wird und somit mehrere nacheinander durchzuführende Ätzschritte durchgeführt werden.

Des Weiteren ist es denkbar, dass das Sackloch oder ein Teilabschnitt des Sacklochs in einem chemischen Ätzprozess aus der flüssigen oder der gasförmigen Phase erfolgen kann. Die erste Elektrodenschicht besteht vorzugsweise aus einem Metall, insbesondere einer Platinschicht, die relativ leicht durchzuätzen bzw. zu ätzen ist.

In einer möglichen Ausführungsform des erfindungsgemäßen Verfahrens ist es möglich, dass der Ätzvorgang bei der zweiten Elektrodenschicht stoppt, sofern die zweite Elektrodenschicht aus einem, im Vergleich zur ersten Elektrodenschicht und zur Isolationsschicht ätzresistenteren Material hergestellt ist. Sofern der Schichtverbund bzw. der Sensor eine zusätzliche Abdeckschicht umfasst, weist die zweite Elektrodenschicht auch im Vergleich zu dieser Abdeckschicht ein ätzresistenteres Material auf. Beispielsweise ist die zweite Elektrodenschicht aus einer Platin-Titan-Legierung (Pt/Ti) hergestellt. Des Weiteren ist es denkbar, dass die zweite Elektrodenschicht aus einer mit Metalloxiden gefüllten Schicht besteht.

In einer weiteren Ausführungsform des erfindungsgemäßen Verfahrens ist es möglich, dass die Isolationsschicht als eine den Ätzprozess stoppende Schicht ausgebildet ist und in einem weiteren Schritt ein Teilabschnitt des Sacklochs in die Isolationsschicht durch einen Tempervorgang bzw. einen Temperschritt mit Phasenumwandlung der Isolationsschicht eingebracht wird.

In einer weiteren Ausführungsform des erfindungsgemäßen wird der mindestens eine Durchgang und/oder ein Durchgang als Sackloch ausgebildet und wird dieses Sackloch oder das mindestens eine Sackloch oder ein Teilabschnitt des Sacklochs durch ein Laserbearbeitungsverfahren in den Schichtverbund eingebracht, wobei die Laserquelle und/oder die Wellenlänge und/oder die Pulsfrequenz des Lasers an die jeweils zu bearbeitende Schicht des Schichtverbunds angepasst wird. Eine weitere Möglichkeit zur Herstellung des Durchgangs, der als Sackloch ausgebildet wird, ist folglich der partielle Abtrag des Schichtverbunds mittels eines Lasers. Es können Laserquellen mit unterschiedlichen, jeweils auf das abzutragende Material abgestimmten Wellenlängen und/oder Pulsfrequenzen zum Einsatz kommen. Eine derartige Vorgehensweise hat den Vorteil, dass die jeweils einzelnen Laserbearbeitungsschritte durch Abstimmung auf das Material der abzutragenden Schicht schnell durchführbar sind, so dass sich insgesamt ein verbessertes Einbringen von Durchgängen und/oder Sacklöchern in den Schichtverbund ergibt. Als besonders vorteilhaft erweist sich die Verwendung eines Ultrakurzpuls-Lasers.

In einer weiteren Ausführungsform des erfindungsgemäßen Verfahrens ist es möglich, dass die Isolationsschicht beim Herstellen des Schichtverbunds ganzflächig, insbesondere durch ein Siebdruckverfahren oder Aufsprühverfahren oder Tauchverfahren oder Spin-Coating-Verfahren, zwischen der ersten Elektrodenfläche und der zweiten Elektrodenfläche erzeugt wird und in einem anschließenden Verfahrensschritt mindestens ein Abschnitt der Isolationsschicht, insbesondere durch strukturiertes Auflösen oder Ätzen oder Ausbrennen, entfernt wird, derart, dass der sich über die erste Elektrodenschicht und die Isolationsschicht ersteckende Durchgang gebildet wird. Ein derartiges Verfahren entspricht dem Prinzip der verlorenen Form. Demnach ist es möglich, gerade bei temperaturstabilen Materialien, mit dem Prinzip der verlorenen Form zu strukturieren. Eine verlorene Form dient zur Erzeugung eines Durchgangs von der ersten Elektrodenschicht zur zweiten Elektrodenschicht. Die Isolationsschicht bzw. isolierende Schicht aus einem temperaturstabilen Material wird zwischen der ersten Elektrodenschicht und der zweiten Elektrodenschicht erzeugt, wobei ein Abschnitt dieser Isolationsschicht vorzugsweise nach dem Aufbringen der ersten Elektrodenschicht durch Auflösen oder Ätzen oder Ausbrennen entfernt wird. Aufgrund dessen wird auch die darüber befindliche erste Elektrodenschicht entfernt. Sofern eine Abdeckschicht ausgebildet wird, wird auch der über dem entfernten Abschnitt der Isolationsschicht befindliche Abschnitt der Abdeckschicht durch das Auflösen oder Ätzen oder Ausbrennen des Isolationsschichtabschnittes entfernt.

Vorzugsweise wird nach dem Einbringen eines Durchgangs und/oder eines Sacklochs in den Schichtverbund eine passive poröse Filterschicht auf der Abdeckschicht aufgebracht. Die passive poröse Filterschicht wird beispielsweise durch einen Aluminiumoxidschaum gebildet. Dieser wird auch über den mindestens einen Durchgang bzw. über das mindestens eine Sackloch ausgebildet.

In einem weiteren nebengeordneten Aspekt betrifft die Erfindung ein Verfahren, das zur Herstellung eines Sensors zur Detektion elektrisch leitfähiger Partikel und/oder polarisierbarer Partikel, insbesondere eines Sensors nach einem der Ansprüche 15-18, dient. Es wird ein Schichtverbund mit einer ersten Elektrodenschicht, einer zweiten Elektrodenschicht und einer zwischen der ersten Elektrodenschicht und der zweiten Elektrodenschicht angeordneten Isolationsschicht hergestellt, wobei die Isolationsschicht und die erste Elektrodenschicht als poröse Schichten ausgebildet werden. Die Porositäten der ersten Elektrodenschicht und der Isolationsschicht werden derart eingestellt, dass mindestens eine Pore der ersten Elektrodenschicht und mindestens eine Pore der Isolationsschicht zumindest abschnittsweise übereinander angeordnet werden, sodass mindestens ein Durchgang zur zweiten Elektrodenschicht hergestellt wird.

Sofern der Sensor eine Abdeckschicht aufweist, wird auch diese Abdeckschicht mit einer Porosität auf die erste Elektrodenschicht aufgetragen, wobei mindestens eine Pore der Abdeckschicht zumindest abschnittsweise derart über einer Pore der ersten Elektrodenschicht und einer Pore der Isolationsschicht angeordnet wird, dass ausgehend von der Abdeckschicht mindestens ein Durchgang zur zweiten Elektrodenschicht gebildet wird. Abschließend kann auf die Abdeckschicht eine passive poröse Filterschicht aufgetragen werden.

In einem weiteren nebengeordneten Aspekt wird ein Verfahren zur Herstellung eines Sensors zur Detektion elektrisch leitfähiger Rußpartikeln, insbesondere zur Herstellung eines Sensors nach einem der Ansprüche 1-18, angegeben, wobei ein Schichtverbund mit einer ersten Elektrodenschicht, einer zweiten Elektrodenschicht und einer zwischen der ersten Elektrodenschicht und der zweiten Elektrodenschicht angeordneten Isolationsschicht hergestellt wird, wobei die Isolationsschicht und die erste Elektrodenschicht strukturiert, insbesondere durch ein Lift-Off-Verfahren und/oder ein Ink-Jet-Verfahren und/oder in einem Stempel-Prozess erzeugt werden, derart, dass aufgrund des strukturierten Auftrags der einzelnen Schichten übereinander ein Durchgang zur zweiten Elektrodenschicht gebildet wird.

Mit anderen Worten wird bereits bei der Herstellung der Isolationsschicht und/oder der ersten Elektrodenschicht eine derartige Struktur hergestellt, die Öffnungen bzw. Aussparungen aufweist, wobei mehrere, zumindest abschnittsweise übereinander angeordnete Öffnungen mindestens einen Durchgang zur zweiten Elektrodenschicht bilden. Sofern der Sensor eine Abdeckschicht aufweist, kann auch diese Abdeckschicht bereits strukturiert auf die erste Elektrodenschicht aufgebracht werden.

Bei allen beschriebenen Verfahren zum Herstellen eines Sensors zur Detektion elektrisch leitfähiger und/oder polarisierbarer Partikel ist es notwendig, dass in der ersten Elektrodenschicht und in die zweite Elektrodenschicht jeweils eine elektrische Kontaktierungsfläche ausgebildet wird. Dies wird dadurch erreicht, dass Abschnitte der ersten Elektrodenschicht und der zweiten Elektrodenschicht frei von über den jeweiligen Elektrodenschichten angeordneten Sensorschichten gehalten werden. Dies kann zum einen dadurch erfolgen, dass die elektrischen Kontaktierungsflächen durch Abtragen und/oder Abätzen und/oder Ablasern darüber angeordneter Sensorschichten hergestellt werden. Des Weiteren ist es denkbar, dass die Isolationsschicht und/oder die erste Elektrodenschicht und/oder die Abdeckschicht strukturiert aufeinander aufgebracht werden, so dass die elektrischen Kontaktierungsflächen bereits bei der Herstellung der einzelnen Sensorschichten freigehalten werden.

In einer weiteren Ausführungsform der Erfindung ist es denkbar, dass die elektrischen Kontaktierungsflächen mit Hilfe von Schablonen beim Herstellen des Schichtverbundes bedeckt werden, so dass die elektrischen Kontaktierungsflächen nicht mit anderen Sensorschichten beschichtet werden können.

Nachfolgend wird die Erfindung anhand von Ausführungsbeispielen unter Bezugnahme auf die beigefügten schematischen Zeichnungen näher erläutert. Hierbei zeigen:
- Fig. 1a-c: Schnittdarstellungen verschiedener Ausführungsformen von Sensoren zur Detektion elektrisch leitfähiger und/oder polarisierbarer Partikel;
- Fig. 2: eine perspektivische Draufsicht auf einen erfindungsgemäßen Sensor;
- Fig. 3: eine mögliche Ausbildung einer zweiten Elektrodenschicht; und
- Fig. 4: eine Schnittdarstellung einer weiteren Ausführungsfom eines Sensors zur Detektion elektrisch leitfähiger und/oder polarisierbarer Partikel.

Im Folgenden werden für gleiche und gleich wirkende Teile gleiche Bezugsziffern verwendet.

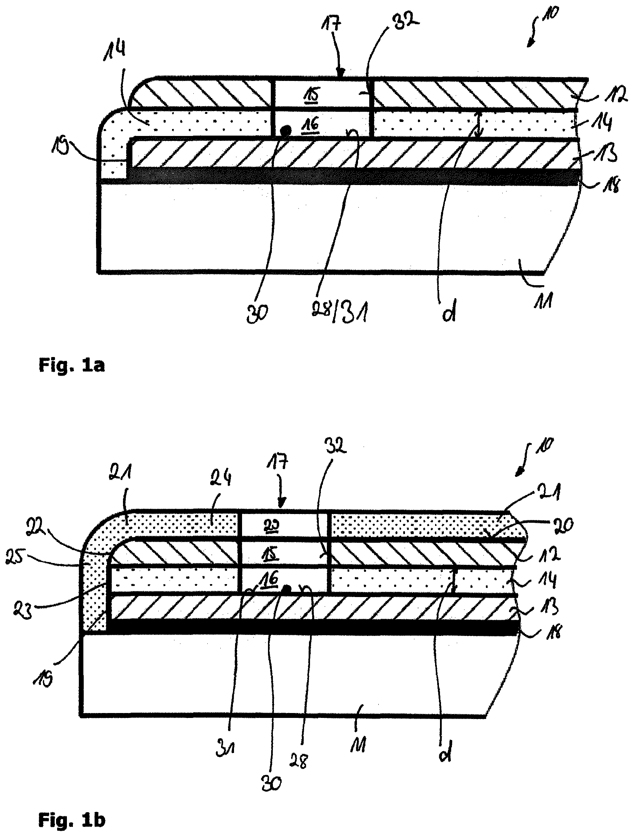

Fig. 1a zeigt in einer Schnittdarstellung einen Sensor 10 zur Detektion elektrisch leitfähiger und/oder polarisierbarer Partikel, insbesondere zur Detektion von Rußpartikel. Der Sensor 10 umfasst ein Substrat 11, eine erste Elektrodenschicht 12 und eine, zwischen dem Substrat 11 und der ersten Elektrodenschicht 12 angeordnete, zweite Elektrodenschicht 13. Zwischen der ersten Elektrodenschicht 12 und der zweiten Elektrodenschicht 13 ist eine Isolationsschicht 14 ausgebildet.

In der ersten Elektrodenschicht 12 und in der Isolationsschicht 14 ist jeweils mindestens eine Öffnung ausgebildet, wobei die Öffnung 15 der ersten Elektrodenschicht 12 und die Öffnung 16 der Isolationsschicht 14 übereinander angeordnet sind, so dass ein Durchgang 17 zur zweiten Elektrodenschicht 13 gebildet ist.

Das Substrat 11 ist zum Zwecke einer hochtemperaturfähigen Anwendung beispielsweise aus Aluminiumoxid (Al₂O₃) oder Magnesiumoxid (MgO) oder aus einem Titanat oder aus Steatit gebildet.

Die zweite Elektrodenschicht 13 ist mittelbar über eine Haftvermittlerschicht 18 mit dem Substrat 11 verbunden. Bei der Haftvermittlerschicht 18 kann es sich beispielsweise um sehr dünn ausgebildetes Aluminiumoxid (Al₂O₃) oder Siliziumdioxid (SiO₂) handeln.

Die erste Elektrodenschicht 12 ist im Ausführungsbeispiel aus einer Platinschicht gebildet. Die zweite Elektrodenschicht 13 besteht im dargestellten Beispiel aus einer Platin-Titan-Legierung (Pt-Ti). Bei der Platin-Titan-Legierung der zweiten Elektrodenschicht 13 handelt es sich um eine im Vergleich zur ersten Elektrodenschicht 12 ätzresistentere Schicht.

Der Abstand der ersten Elektrodenschicht 12 zur zweiten Elektrodenschicht 13 wird durch die Dicke d der Isolationsschicht 14 gebildet. Die Dicke d der Isolationsschicht kann 0,5 µm bis 50 µm betragen. Im vorliegenden Fall beträgt die Dicke d der Isolationsschicht 10 µm. Die Empfindlichkeit des erfindungsgemäßen Sensors 10 kann durch Verringerung des Abstandes der ersten Elektrodenschicht 12 von der zweiten Elektrodenschicht 13 und somit durch Verringerung der Dicke d der Isolationsschicht 14 erhöht werden.

Die Isolationsschicht 14 deckt die zweite Elektrodenschicht 13 an der dargestellten Seitenfläche 19 ab, so dass die zweite Elektrodenschicht 13 seitlich ummantelt und isoliert ist.

Der Durchgang 17 ist als Sackloch ausgebildet, wobei ein Abschnitt der zweiten Elektrodenschicht 13 als Boden 28 des Sacklochs ausgebildet ist. Das Sackloch bzw. der Durchgang 17 erstreckt sich über die Isolationsschicht 14 und über die erste Elektrodenschicht 13. Der Durchgang 17 wird mit anderen Worten durch die übereinander angeordneten Öffnungen 15 und 16 gebildet. Die Öffnungen 15 und 16 sind in der dargestellten Ausführungsform nicht randseitig ausgebildet.

Ein Rußpartikel 30 kann in den Durchgang 17 gelangen. In Fig. 1a liegt der Partikel 30 am Boden 28 des Sacklochs und somit auf einer Seite 31 der zweiten Elektrodenschicht 13 auf. Allerdings berührt der Partikel 30 nicht die erste Elektrodenschicht 12 im Randbereich 32, der die Öffnung 15 begrenzt. Aufgrund der Ablagerung des Partikels 30 am Boden 28 und der Berührung der zweiten Elektrodenschicht 13 auf der Seite 31 wird der elektrische Widerstand reduziert. Dieser Abfall des Widerstandes wird als Maß für die angesammelte Partikelmasse genutzt. Beim Erreichen eines vordefinierten Schwellwertes hinsichtlich des Widerstandes wird der Sensor 10 erhitzt, so dass der abgelagerte Partikel 30 verbrannt wird und der Sensor 10 nach dem Freibrennen in einem nächsten Detektionszyklus elektrisch leitfähige und/oder polarisierbare Partikel detektieren kann.

Fig. 1b zeigt ebenfalls in einer Schnittdarstellung einen Sensor 10 zur Detektion elektrisch leitfähiger und/oder polarisierbarer Partikel, insbesondere zur Detektion von Rußpartikel. Ebenfalls dargestellt sind eine erste Elektrodenschicht 12 und eine, zwischen dem Substrat 11 und der ersten Elektrodenschicht 12 angeordnete, zweite Elektrodenschicht 13. Zwischen der ersten Elektrodenschicht 12 und der zweiten Elektrodenschicht 13 ist eine Isolationsschicht 14 ausgebildet. Bezüglich der Eigenschaften und der Ausgestaltung der Öffnungen 15 und 16 wird auf die Erläuterungen im Zusammenhang mit der Ausführungsform gemäß Fig. 1a verwiesen.

Auf der von der Isolationsschicht 14 abgewandten Seite 20 der ersten Elektrodenschicht 12 ist eine Abdeckschicht 21, die beispielsweise aus Keramik und/oder Glas und/oder Metalloxid gebildet ist, ausgebildet. Die Abdeckschicht 21 ummantelt die Seitenfläche 22 der ersten Elektrodenschicht 12, die Seitenfläche 23 der Isolationsschicht 14 und die Seitenfläche 19 der zweiten Elektrodenschicht 13. Die Abdeckschicht 21 deckt somit die Seitenflächen 19, 22 und 23 ab, so dass die erste Elektrodenschicht 12, die zweite Elektrodenschicht 13 und die Isolationsschicht 14 seitlich isoliert sind. Die Abdeckschicht 21 umfasst somit einen oberen Abschnitt 24, der auf der Seite 20 der ersten Elektrodenschicht 12 ausgebildet ist und einen Seitenabschnitt 25, der zur seitlichen Isolation des Sensors 10 dient.

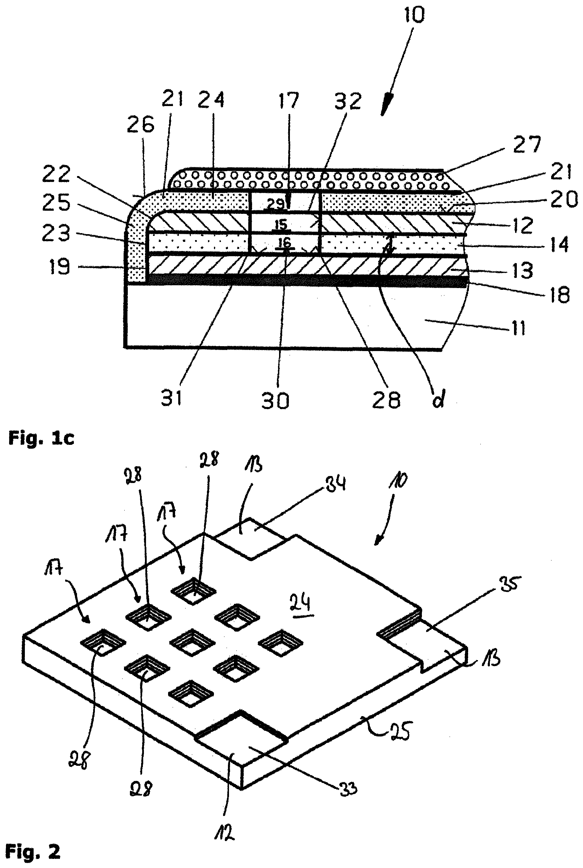

Fig. 1c zeigt in einer Schnittdarstellung einen Sensor 10 zur Detektion elektrisch leitfähiger und/oder polarisierbarer Partikel, insbesondere zur Detektion von Rußpartikel. Der Sensor 10 umfasst ein Substrat 11, eine erste Elektrodenschicht 12 und eine, zwischen dem Substrat 11 und der ersten Elektrodenschicht 12 angeordnete, zweite Elektrodenschicht 13. Zwischen der ersten Elektrodenschicht 12 und der zweiten Elektrodenschicht 13 ist eine Isolationsschicht 14 ausgebildet. In der ersten Elektrodenschicht 12 und in der Isolationsschicht 14 ist jeweils mindestens eine Öffnung ausgebildet, wobei die Öffnung 15 der ersten Elektrodenschicht 12 und die Öffnung 16 der Isolationsschicht 14 übereinander angeordnet sind, so dass ein Durchgang 17 zur zweiten Elektrodenschicht 13 gebildet ist.

Das Substrat 11 ist zum Zwecke einer hochtemperaturfähigen Anwendung beispielsweise aus Aluminiumoxid (Al₂O₃) oder Magnesiumoxid (MgO) oder aus einem Titanat oder aus Steatit gebildet.

Die zweite Elektrodenschicht 13 ist mittelbar über eine Haftvermittlerschicht 18 mit dem Substrat 11 verbunden. Bei der Haftvermittlerschicht 18 kann es sich beispielsweise um sehr dünn ausgebildetes Aluminiumoxid (Al₂O₃) oder Siliziumdioxid (SiO₂) handeln.

Die erste Elektrodenschicht 12 ist im Ausführungsbeispiel aus einer Platinschicht gebildet. Die zweite Elektrodenschicht 13 besteht im dargestellten Beispiel aus einer Platin-Titan-Legierung (Pt-Ti). Bei der Platin-Titan-Legierung der zweiten Elektrodenschicht 13 handelt es sich um eine im Vergleich zur ersten Elektrodenschicht 12 ätzresistentere Schicht.

Die Isolationsschicht 14 besteht aus einem temperaturfestes Material mit hohem Isolationswiderstand. Beispielsweise kann die Isolationsschicht 14 aus Aluminiumoxid (Al₂O₃) oder Siliziumdioxid (SiO₂) oder Magnesiumoxid (MgO) oder Siliziumnitrid (Si₃N₄) oder Glas gebildet sein.

Der Abstand der ersten Elektrodenschicht 12 zur zweiten Elektrodenschicht 13 wird durch die Dicke d der Isolationsschicht 14 gebildet. Die Dicke d der Isolationsschicht kann 0,5 µm bis 50 µm betragen. Im vorliegenden Fall beträgt die Dicke d der Isolationsschicht 10 µm. Die Empfindlichkeit des erfindungsgemäßen Sensors 10 kann durch Verringerung des Abstandes der ersten Elektrodenschicht 12 von der zweiten Elektrodenschicht 13 und somit durch Verringerung der Dicke d der Isolationsschicht 14 erhöht werden.

Auf der von der Isolationsschicht 14 abgewandten Seite 20 der ersten Elektrodenschicht 12 ist eine Abdeckschicht 21, die beispielsweise aus Keramik und/oder Glas und/oder Metalloxid gebildet ist, ausgebildet. Die Abdeckschicht 21 ummantelt die Seitenfläche 22 der ersten Elektrodenschicht 12, die Seitenfläche 23 der Isolationsschicht 14 und die Seitenfläche 19 der zweiten Elektrodenschicht 13. Die Abdeckschicht 21 deckt somit die Seitenflächen 19, 22 und 23 ab, so dass die erste Elektrodenschicht 12, die zweite Elektrodenschicht 13 und die Isolationsschicht 14 seitlich isoliert sind. Die Abdeckschicht 21 umfasst somit einen oberen Abschnitt 24, der auf der Seite 20 der ersten Elektrodenschicht 12 ausgebildet ist und einen Seitenabschnitt 25, der zur seitlichen Isolation des Sensors 10 dient.

In einer weiteren Ausführungsform der Erfindung ist es denkbar, dass die Abdeckschicht 21 auch das Substrat 11 seitlich ummantelt.

Auf der von der ersten Elektrodenschicht 12 abgewandten Seite 26 der Abdeckschicht 21 ist eine poröse Filterschicht 27 ausgebildet. Aufgrund der Ausbildung dieser, dem Medium, das hinsichtlich elektrisch leitfähiger und/oder polarisierbarer Partikel detektiert werden soll, zugewandten passiven porösen Filter- bzw. Schutzschicht 27 wird die Sensitivität des Sensors 10 erhöht, da größere Partikel bzw. Bestandteile, welche die Messung bzw. Detektion stören könnten, von der ersten Elektrodenschicht 12 und der zweiten Elektrodenschicht 13 ferngehalten werden. Da der Durchgang 17 von der porösen Filterschicht 27 bedeckt ist, können durch die Poren der porösen Filterschicht 27 zwar noch Partikel durchdringen, Kurzschlüsse aufgrund von großen eingedrungenen Partikel können aber aufgrund der porösen Filterschicht 27 vermieden werden.

Der Durchgang 17 ist als Sackloch ausgebildet, wobei ein Abschnitt der zweiten Elektrodenschicht 13 als Boden 28 des Sacklochs ausgebildet ist. Das Sackloch bzw. der Durchgang 17 erstreckt sich über die Isolationsschicht 14, die erste Elektrodenschicht 13 und über die Abdeckschicht 21. Hierzu weist auch die Abdeckschicht 21 eine Öffnung 29 auf. Der Durchgang 17 wird mit anderen Worten durch die übereinander angeordneten Öffnungen 29, 15 und 16 gebildet.

Der dargestellte Sensor 10 ist aufgrund der Materialauswahl der einzelnen Schichten und der Isolation der einzelnen Schichten zueinander für eine Hochtemperaturanwendung von bis zu beispielsweise 850 °C geeignet. Der Sensor 10 kann demnach als Rußpartikelsensor im Abgasstrom eines Verbrennungsmotors eingesetzt werden.

Ein Rußpartikel 30 kann nach dem Durchdringen der porösen Filterschicht 27 in den Durchgang 17 gelangen. In Fig. 1c liegt der Partikel 30 am Boden 28 des Sacklochs und somit auf einer Seite 31 der zweiten Elektrodenschicht 13 auf. Allerdings berührt der Partikel nicht die erste Elektrodenschicht 12 im Randbereich 32, der die Öffnung 15 begrenzt. Aufgrund der Ablagerung des Partikels 30 am Boden 28 und der Berührung der zweiten Elektrodenschicht 13 auf der Seite 31 wird der elektrische Widerstand reduziert. Dieser Abfall des Widerstandes wird als Maß für die angesammelte Partikelmasse genutzt. Beim Erreichen eines vordefinierten Schwellwertes hinsichtlich des Widerstandes wird der Sensor 10 erhitzt, so dass der abgelagerte Partikel 30 verbrannt wird und der Sensor 10 nach dem Freibrennen in einem nächsten Detektionszyklus elektrisch leitfähige und/oder polarisierbare Partikel detektieren kann.

Fig. 2 zeigt eine perspektivische Ansicht auf einen Sensor 10. Dieser weist neun Durchgänge 17 auf. Zur besseren Veranschaulichung ist in Fig. 2 die poröse Filterschicht 27 nicht dargestellt. Zu erkennen ist der obere Abschnitt 24 der Abdeckschicht 21 sowie der Seitenabschnitt 25 der Abdeckschicht 21. Die Böden 28 der Durchgänge 17 werden durch Abschnitte der zweiten Elektrodenschicht 13 gebildet. Die neun Durchgänge 17 weisen einen quadratischen Querschnitt auf, wobei der quadratische Querschnitt eine Fläche von 15 x 15 µm² bis 50 x 50 µm² aufweisen kann.

Die erste Elektrodenschicht 12 weist eine elektrische Kontaktierungsfläche 33 auf. Die zweite Elektrodenschicht 13 weist ebenfalls eine elektrische Kontaktierungsfläche 34 auf. Die beiden elektrischen Kontaktierungsflächen 33 und 34 sind frei von über den jeweiligen Elektrodenschichten 12 und 13 angeordneten Sensorschichten. Die elektrischen Kontaktierungsflächen 33 und 34 sind jeweils an ein Anschlusspad (nicht dargestellt) angeschlossen oder anschließbar.

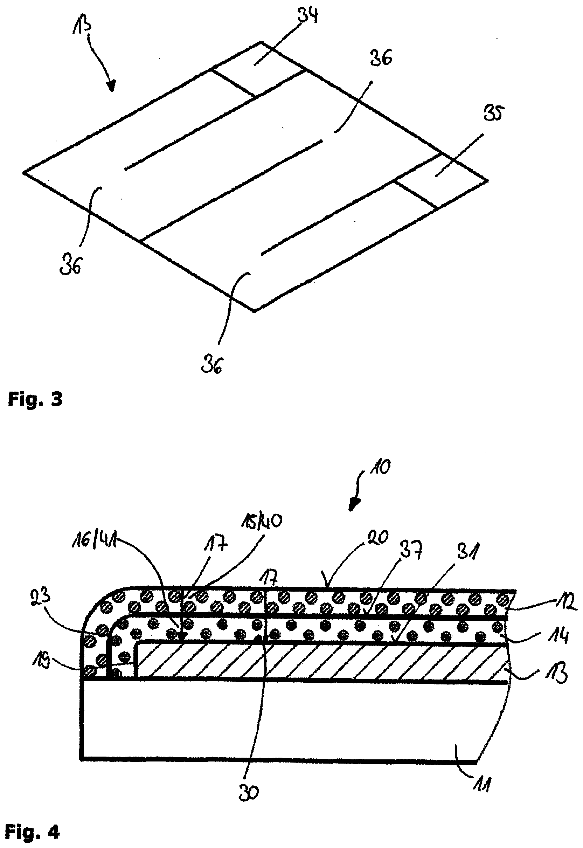

Die zweite Elektrodenschicht 13 weist eine zusätzliche elektrische Kontaktierungsfläche 35 auf, die ebenfalls frei von über der Elektrodenschicht 13 angeordneten Sensorschichten ist. Diese zusätzliche elektrische Kontaktierungsfläche 35 kann an ein zusätzliches Anschlusspad angeschlossen werden. Die zusätzliche elektrische Kontaktierungsfläche 35 ist notwendig, um die zweiten Elektrodenschicht 13 als Heizwendel oder als temperatursensitive Schicht oder als Schirmelektrode verwenden zu können. Je nach Kontaktierungsbelegung (siehe Fig. 3) der elektrischen Kontaktierungsflächen 34 und 35 kann die zweite Elektrodenschicht 13 entweder heizen bzw. den Partikel 30 verbrennen oder den Partikel 30 detektieren.

Um eine Elektrodenschicht, hier die zweite Elektrodenschicht 13, als Heizwendel und/oder temperatursensitive Schicht und/oder Schirmelektrode verwenden zu können, weist die zweite Elektrodenschicht 13 wenige Leiterbahnschleifen 36 auf.

In Fig. 4 ist eine weitere Ausführungsform eines möglichen Sensors 10 dargestellt. Die erste Elektrodenschicht 12 und die Isolationsschicht 14 sind jeweils porös ausgebildet, wobei die mindestens eine Öffnung 15 der ersten Elektrodenschicht 12 und die mindestens eine Öffnung 16 der Isolationsschicht 14 jeweils aus mindestens einer Pore gebildet ist, wobei die Pore 41 der Isolationsschicht 14 und die Pore 40 der ersten Elektrodenschicht 12 zumindest abschnittsweise derart übereinander angeordnet sind, dass der mindestens eine Durchgang 17 zur zweiten Elektrodenschicht 13 gebildet ist. Mit anderen Worten kann auf eine aktive bzw. nachträgliche Strukturierung der Durchgänge verzichtet werden, wobei die erste Elektrodenschicht 12 und die Isolationsschicht 14 für das zu messende Medium durchlässig ausgebildet ist. Die Durchgänge 17 sind in Fig. 4 mit Hilfe der senkrechten Pfeile dargestellt.

Die Durchgänge 17 können durch einen porösen bzw. grobkörnigen Aufbau der beiden Schichten 12 und 14 gebildet werden. Sowohl die erste Elektrodenschicht 12 als auch die Isolationsschicht 14 kann durch Zusammensintern einzelner Partikel hergestellt werden, wobei Poren 40 und 41 bzw. Hohlräume für das zu messende Medium beim Zusammensintern gebildet werden. Es muss demnach ausgehend von der Seite 20 der ersten Elektrodenschicht 12, die von der Isolationsschicht 14 abgewandt ist, bis zur Seite 31 der zweiten Elektrodenschicht 13, die der Isolationsschicht 14 zugewandt ist, aufgrund der übereinander ausgebildeten Anordnung von Poren 40 und 41 der ersten Elektrodenschicht 12 und der Isolationsschicht 14 ein Durchgang 17 gebildet sein, der einen Zugang eines zu messenden bzw. detektierenden Partikels 30 zur zweiten Elektrodenschicht 13 ermöglicht.

Im dargestellten Beispiel ist die zweite Elektrodenschicht 13 an der Seitenfläche 19 vollständig von der porösen Isolationsschicht 14 ummantelt. Die zweite Elektrodenschicht 13 wird demnach auf der Seite 31 und an den Seitenflächen 19 von der porösen Isolationsschicht 14 bedeckt. Die poröse erste Elektrodenschicht 12 ummantelt hingegen die poröse Isolationsschicht 14 an der Seitenfläche 23 und an der von der zweiten Elektrodenschicht 13 abgewandten Seite 37. Die Isolationsschicht 14 wird demnach auf der Seite 37 und an den Seitenflächen 23 von der ersten Elektrodenschicht 12 bedeckt.

Sofern dieser Sensor 10 eine Abdeckschicht aufweist, ist auch diese Abdeckschicht porös auszubilden, derart, dass eine Pore der Abdeckschicht, eine Pore 40 der ersten Elektrodenschicht 12 und eine Pore 41 der Isolationsschicht 14 einen Durchgang 17 zur zweiten Elektrodenschicht 13 bilden.

Hinsichtlich eines möglichen Herstellungsverfahrens im Zusammenhang mit dem erfindungsgemäßen Sensoren 10 der Fig. 1a-c, 2 und 4 wird auf die bereits beschriebenen Herstellungsmöglichkeiten, insbesondere Ätzverfahren, verwiesen.

### Bezuaszeichenliste

- 10: Sensor
- 11: Substrat
- 12: erste Elektrodenschicht
- 13: zweite Elektrodenschicht
- 14: Isolationsschicht
- 15: Öffnung erste Elektrodenschicht
- 16: Öffnung Isolationsschicht
- 17: Durchgang
- 18: Haftvermittlerschicht
- 19: Seitenfläche zweite Elektrodenschicht
- 20: Seite der ersten Elektrodenschicht
- 21: Abdeckschicht
- 22: Seitenfläche erste Elektrodenschicht
- 23: Seitenfläche Isolationsschicht
- 24: oberer Abschnitt Abdeckschicht
- 25: Seitenabschnitt Abdeckschicht
- 26: Seite Abdeckschicht
- 27: poröse Filterschicht
- 28: Boden Sackloch
- 29: Öffnung Abdeckschicht
- 30: Partikel
- 31: Seite zweite Elektrodenschicht
- 32: Randbereich erste Elektrodenschicht
- 33: elektrische Kontaktierungsfläche erste Elektrodenschicht
- 34: elektrische Kontaktierungsfläche zweite Elektrodenschicht
- 35: zusätzliche elektrische Kontaktierungsfläche zweite Elektrodenschicht
- 36: Leiterbahnschleife
- 37: Seite Isolationsschicht
- 40: Pore erste Elektrodenschicht
- 41: Pore Isolationsschicht

- d: Dicke Isolationsschicht

## Patentansprüche

1. Sensor (10) zur Detektion von Rußpartikel (30), umfassend ein Substrat (11), eine erste Elektrodenschicht (12) und eine, zwischen dem Substrat (11) und der ersten Elektrodenschicht (12) angeordnete, zweite Elektrodenschicht (13), wobei zwischen der ersten Elektrodenschicht (12) und der zweiten Elektrodenschicht (13) eine Isolationsschicht (14) ausgebildet ist und in der ersten Elektrodenschicht (12) und in der Isolationsschicht (14) jeweils mindestens eine Öffnung (15; 16) ausgebildet ist, wobei die Öffnung (15) der ersten Elektrodenschicht (12) und die Öffnung (16) der Isolationsschicht (14) zumindest abschnittsweise derart übereinander angeordnet sind, dass mindestens ein Durchgang (17) zur zweiten Elektrodenschicht (13) gebildet ist,
wobei der mindestens eine Durchgang (17) als Sackloch ausgebildet ist und wobei sich das Sackloch mindestens über die Isolationsschicht (14) und über die erste Elektrodenschicht (12) erstreckt,
**dadurch gekennzeichnet dass** ein Abschnitt der zweiten Elektrodenschicht (13) als Boden (28) des Sacklochs ausgebildet ist und dass das Sackloch einen quadratischen Querschnitt mit einer Fläche von 10 x 10 µm² - 100 x 100 µm² aufweist.

2. Sensor (10) nach Anspruch 1,
**dadurch gekennzeichnet, dass**
die Öffnung (15) der ersten Elektrodenschicht (12) mit Abstand zu dem Randbereich der ersten Elektrodenschicht (12) und die Öffnung (16) der Isolationsschicht (14) mit Abstand zu dem Randbereich der Isolationsschicht (14) ausgebildet ist.

3. Sensor (10) nach einem der vorhergehenden Ansprüche,
**dadurch gekennzeichnet, dass**
die erste Elektrodenschicht (12) und/oder die zweite Elektrodenschicht (13) aus Metall oder einer Legierung, insbesondere aus einem hochtemperaturfesten Metall oder einer hochtemperaturfesten Legierung, besonders bevorzugt aus einem Metall der Platinmetalle oder aus einer Legierung aus einem Metall der Platinmetalle, gebildet ist.

4. Sensor (10) nach einem der vorhergehenden Ansprüche,
**dadurch gekennzeichnet, dass**
die zweite Elektrodenschicht (13) aus einem Metall oder einer Legierung gebildet ist, die eine höhere Ätzresistenz als das Metall oder die Legierung der ersten Elektrodenschicht (12) aufweist.

5. Sensor (10) nach einem der vorhergehenden Ansprüche,
**dadurch gekennzeichnet, dass**
auf der von der Isolationsschicht (14) abgewandten Seite (20) der ersten Elektrodenschicht (12) eine Abdeckschicht (21), die insbesondere aus Keramik und/oder Glas und/oder Metalloxid gebildet ist, ausgebildet ist.

6. Sensor (10) nach einem der vorhergehenden Ansprüche,
**dadurch gekennzeichnet, dass** das Sackloch einen quadratischen Querschnitt mit einer Fläche von 15 x 15 µm² - 50 x 50 µm², insbesondere von 20 x 20 µm², aufweist.

7. Sensor (10) nach einem der vorhergehenden Ansprüche,
**gekennzeichnet durch**
die Ausbildung einer Vielzahl von Sacklöchern, wobei mindestens zwei Sacklöcher unterschiedlich große Querschnitte aufweisen.

8. Sensor (10) nach einem der vorhergehenden Ansprüche,
**dadurch gekennzeichnet, dass**
die erste Elektrodenschicht (12) und die zweite Elektrodenschicht (13) jeweils eine elektrische Kontaktierungsfläche (33; 34) aufweisen, die frei von über den jeweiligen Elektrodenschichten (12; 13) angeordneten Sensorschichten (12; 14; 21; 27) sind und jeweils an ein Anschlusspad angeschlossen oder anschließbar sind.

9. Verfahren zum Herstellung eines Sensors (10) nach einem der Ansprüche 1 bis 8, wobei ein Schichtverbund mit einer ersten Elektrodenschicht (12), einer zweiten Elektrodenschicht (13) und einer zwischen der ersten Elektrodenschicht (12) und der zweiten Elektrodenschicht (13) angeordneten Isolationsschicht (14) hergestellt wird, wobei in den Schichtverbund anschließend mindestens einen Durchgang (17) eingebracht wird, der sich über die erste Elektrodenschicht (12) und die Isolationsschicht (14) erstreckt, wobei der Boden (28) des Durchgangs (17) durch einen Abschnitt der zweiten Elektrodenschicht (13) gebildet wird.

10. Verfahren nach Anspruch 9,
**dadurch gekennzeichnet, dass**
der Schichtverbund und/oder einzelne Schichten (11; 12; 13; 14; 18; 21; 27) des Schichtverbundes durch eine Dünnschichttechnik, insbesondere durch ein Aufdampfverfahren oder ein Kathodenzerstäubungsverfahren, oder eine Dickschichttechnik, insbesondere ein Siebdruckverfahren, hergestellt wird.

11. Verfahren nach einem der Ansprüche 9 bis 10,
**dadurch gekennzeichnet, dass**
der Durchgang (17) als Sackloch ausgebildet wird und das mindestens eine Sackloch oder ein Teilabschnitt des Sacklochs durch mindestens ein Ätzverfahren, insbesondere durch ein Plasma-Ionen-Ätzverfahren, oder durch mehrere nacheinander durchgeführte Ätzverfahren, die auf die jeweils zu ätzende Schicht (12; 14; 21) des Schichtverbunds angepasst sind, in den Schichtverbund eingebracht wird.

12. Verfahren nach Anspruch 11,
**dadurch gekennzeichnet, dass**
die Isolationsschicht (14) als eine den Ätzprozess stoppende Schicht ausgebildet ist und in einem weiteren Schritt ein Teilabschnitt des Sacklochs in die Isolationsschicht (14) durch einen Tempervorgang mit Phasenumwandlung der Isolationsschicht eingebracht wird.

13. Verfahren nach einem der Ansprüche 9 bis 12,
**dadurch gekennzeichnet, dass**
der Durchgang (17) als Sackloch ausgebildet wird und das mindestens eine Sackloch oder ein Teilabschnitt des Sacklochs durch ein Laserbearbeitungsverfahren in den Schichtverbund eingebracht wird, wobei die Laserquelle und/oder die Wellenlänge und/oder die Pulsfrequenz des Lasers an die jeweils zu bearbeitende Schicht (12; 14; 21) des Schichtverbunds angepasst wird.

14. Verfahren nach Anspruch 9,
**dadurch gekennzeichnet, dass**
die Isolationsschicht (14) beim Herstellen des Schichtverbunds ganzflächig, insbesondere durch ein Siebdruckverfahren oder Aufsprühverfahren oder Tauchverfahren oder Spin-Coating-Verfahren, zwischen der ersten Elektrodenfläche (12) und der zweiten Elektrodenfläche (13) erzeugt wird und in einem anschließenden Verfahrensschritt mindestens ein Abschnitt der Isolationsschicht (14), insbesondere durch strukturiertes Auflösen oder Ätzen oder Ausbrennen, entfernt wird, derart, dass der sich über die erste Elektrodenschicht (12) und die Isolationsschicht (14) erstreckende Durchgang (17) gebildet wird.

15. Verfahren zum Herstellung eines Sensors (10) nach einem der Ansprüche 1 bis 8, wobei ein Schichtverbund mit einer ersten Elektrodenschicht (12), einer zweiten Elektrodenschicht (13) und einer zwischen der ersten Elektrodenschicht (12) und der zweiten Elektrodenschicht (13) angeordneten Isolationsschicht (14) hergestellt wird, wobei die Isolationsschicht (14) und die erste Elektrodenschicht (12) strukturiert, insbesondere durch ein Lift-Off-Verfahren und/oder ein Ink-Jet-Verfahren und/oder in einem Stempel-Prozess, erzeugt werden, derart, dass aufgrund des strukturierten Auftrags der einzelnen Schichten (12; 14; 21) aufeinander ein Durchgang (17) zur zweiten Elektrodenschicht (13) gebildet wird.

## Claims

1. Sensor (10) for detecting soot particles (30), comprising a substrate (11), a first electrode layer (12) and, arranged between the substrate (11) and the first electrode layer (12), a second electrode layer (13), wherein between the first electrode layer (12) and the second electrode layer (13), an isolation layer (13) is formed and in each of the first electrode layer (12) and in the isolation layer (14) at least one opening (15; 16) is provided, wherein the opening (15) of the first electrode layer (12) and the opening (16) of the isolation layer (14) are arranged at least in sections on top of each other in such a way that at least one passage (17) to the second electrode layer (13) is formed, wherein the at least one passage (17) is in the form of a blind hole and wherein the blind hole extends at least over the isolation layer (14) and over the first electrode layer (12),
**characterised in that**
a section of the second electrode layer (13) is designed as the base (28) of the blind hole and **in that** the blind hole has a quadratic cross-section with an area of 10 x 10 µm² - 100 x 100 µm².

2. Sensor (10) according to claim 1
**characterised in that**
the opening (15) of the first electrode layer (12) is produced at a distance from the marginal region of the first electrode layer (12) and opening (16) of the isolation layer (14) is produced at a distance from the marginal region of isolation layer (14).

3. Sensor (10) according to any one of the preceding claims **characterised in that**
the first electrode layer (12) and/or the second electrode layer (13) is/are made of metal or of an alloy, in particular a high temperature-resistant metal or high temperature-resistant alloy, particularly preferably of a metal of the platinum metals or of an alloy of a metal of the platinum metals.

4. Sensor (10) according to any one of the preceding claims
**characterised in that**
the second electrode layer (13) is made of a metal or an alloy which has a greater etching resistance than the metal or the alloy of the first electrode layer (12) .

5. Sensor (10) according to any one of the preceding claims,
**characterised in that**
on the side (20) of the first electrode layer (12) facing away from the isolation layer (14), a cover layer (21) is produced which, in particular, is made of ceramic and/or glass and/or metal oxide.

6. Sensor (10) according to any one of the preceding claims
**characterised in that** the
blind hole has a quadratic cross-section with an area of 15 x 15 µm² - 50 x 50 µm², more particularly of 20 x 20 µm².

7. Sensor (10) according to any one of the preceding claims,
**characterised by**
the provision of a plurality of blind holes, wherein at least two blind holes comprise cross-sections of different dimensions.

8. Sensor (10) according to any one of the preceding claims
**characterised in that**
the first electrode layer (12) and the second electrode layer (13) each comprise an electrical contacting surface (33; 34), both of which are free of sensor layers (12; 14; 21; 27) arranged over the respective electrode layers (12; 13) and are each connected to or are connectable to a connection pad.

9. Method of producing a sensor (10) according to any one claims 1 to 8, wherein a layered composite is produced with a first electrode layer (12), a second electrode layer (13), and an isolation layer (14) arranged between the first electrode layer (12) and the second electrode layer (13), wherein into the layered composite at least one passage (17) is incorporated which extends over the first electrode layer (12) and the isolation layer (14), wherein the base (28) of the passage (17) is formed by a section of the second electrode layer (13).

10. Method according to claim 9
**characterised in that**
the layered composite and/or individual layers (11; 12; 13; 14; 18; 21; 27) of the layered composite is/are produced by way of a thin-layer technology, in particular through a vapour deposition process or a cathode sputtering process, or a thick-layer technology, more particularly a screen-printing process.

11. Method according to any one of claims 9 to 10
**characterised in that**
the passage (17) is formed as a blind hole and the at least one blind hole or a partial section of the blind hole is incorporated into the layered composite by way of at least one etching process, in particular by a plasma-ion etching process, or by way of several etching processes carried out one after the other, which are each adapted to the respective layer (12; 14; 21) of the layered composite to be etched.

12. Method according to claim 11
**characterised in that**
the isolation layer (14) is designed as a layer that stops the etching process, and in a further step a partial section of the blind hole is incorporated into the isolation layer (14) by way of a tempering process with phase transformation of the isolation layer.

13. Method according to any one of claims 9 to 12
**characterised in that**
the passage (17) is in the form of a blind hole and the at least one blind hole or a partial section of the blind hole is produced in the layered composite by a laser machining process, wherein the laser source and/or the wavelength and/or the pulse frequency of the laser is adapted to the respective layer (12; 14; 21) of the layered composite to be processed.

14. Method according to claim 9
**characterised in that**
during the production of the layered composite, the isolation layer (14) is produced in its entirety, in particular by way of a screen printing process or sputtering process or immersion process or spin-coating process, between the first electrode surface (12) and the second electrode surface (13), and in a subsequent processing stage at least one section of the isolation layer (14) is removed, in particular through structured dissolution or etching or burning out, in such a way that the passage (17) extending over the first electrode layer (12) and the isolation layer (14) is formed.

15. Method of producing a sensor (10) according to any one of claims 1 to 8 wherein a layered composite is produced with a first electrode layer (12), a second electrode layer (13) and an isolation layer (14) arranged between the first electrode layer (12) and the second electrode layer (13), wherein the isolation layer (14) and the first electrode layer (12) are produced in structured manner, in particular by way of a lift-off process and/or ink jet process and/or in a stamping process, in such a way that due to the structured application of the individual layers (12; 14; 21) on top of each other, a passage (17) to the second electrode layer (13) is formed.

## Revendications

1. Capteur (10), destiné à détecter des particules de suie (30), comprenant un substrat (11), une première couche d'électrode (12) et une deuxième couche d'électrode (13) placée entre le substrat (11) et la première couche d'électrode (12), entre la première couche d'électrode (12) et la deuxième couche d'électrode (13) étant conçue une couche isolante (14) et dans la première couche d'électrode (12) et dans la couche isolante (14) étant conçu respectivement au moins un orifice (15; 16), l'orifice (15) de la première couche d'électrode et (12) l'orifice (16) de la couche isolante (14) étant superposés au moins par endroits, de sorte à former au moins un passage (17) vers la deuxième couche d'électrode (13),
l'au moins un passage (17) étant conçu sous la forme d'un trou borgne et le trou borgne s'étendant au moins sur la couche isolante (14) et sur la première couche d'électrode (12)
**caractérisé**
**en ce qu'**un segment de la deuxième couche d'électrode (13) est conçu sous la forme de fond inférieur (28) du trou borgne et **en ce que** le trou borgne présente une section transversale carrée, d'une surface de 10 X 10 µm² à 100 X 100 µm².

2. Capteur (10) selon la revendication 1,
**caractérisé**
**en ce que** l'orifice (15) de la première couche d'électrode (12) est conçu avec un écart par rapport à la zone marginale de la première couche d'électrode (12) et l'orifice (16) de la couche isolante (14) est conçu avec un écart par rapport à la zone marginale de la couche isolante (14).

3. Capteur (10) selon l'une quelconque des revendications précédentes,
**caractérisé**
**en ce que** la première couche d'électrode (12) et/ou la deuxième couche d'électrode (13) est conçue en métal ou en un alliage, notamment en un métal résistant à de hautes températures ou en un alliage résistant à de hautes températures, de manière particulièrement préférentielle en un métal relevant du groupe des platines ou en un alliage d'un métal relevant du groupe des platines.

4. Capteur (10) selon l'une quelconque des revendications précédentes,
**caractérisé**
**en ce que** la deuxième couche d'électrode (13) est conçue en un métal ou en un alliage faisant preuve d'une résistance à la gravure plus élevée que celle du métal ou de l'alliage de la première couche d'électrode (12).

5. Capteur (10) selon l'une quelconque des revendications précédentes,
**caractérisé**
**en ce que** sur la face (20) de la première couche d'électrode (12) qui est opposée à la couche isolante (14) est conçue une couche de couverture (21), qui est créée notamment en céramique et/ou en verre et/ou en un oxyde métallique.

6. Capteur (10) selon l'une quelconque des revendications précédentes,
**caractérisé**
**en ce que** le trou borgne présente une section transversale carrée, d'une surface de 15 x 15 µm² à 50 x 50 µm², notamment de 20 x 20 µm².

7. Capteur (10) selon l'une quelconque des revendications précédentes,
**caractérisé par**
la création d'une pluralité de trous borgnes, au moins deux trous borgnes présentant des sections transverses de différentes tailles de section transversale.

8. Capteur (10) selon l'une quelconque des revendications précédentes,
**caractérisé**
**en ce que** la première couche d'électrode (12) et la deuxième couche d'électrode (13) présentent chacune une surface de contact (33; 34) électrique, qui est exempte de couches de capteur (12; 14; 21; 27) placées sur les couches d'électrodes (12; 13) respectives et qui sont respectivement raccordées ou susceptibles d'être raccordées sur un plot de connexion.

9. Procédé, destiné à fabriquer un capteur (10) selon l'une quelconque des revendications 1 à 8, lors duquel on établit un assemblage de couches avec une première couche d'électrode (12), une deuxième couche d'électrode (13) et une couche isolante (14) placée entre la première couche d'électrode (12) et la deuxième couche d'électrode (13), lors duquel on ménage ensuite dans l'assemblage de couches au moins un passage (17) qui s'étend sur la première couche d'électrode (12) et la couche isolante (14), le fond inférieur (28) du passage (17) étant créé par un segment de la deuxième couche d'électrode (13).

10. Procédé selon la revendication 9,
**caractérisé**
**en ce qu'**on fabrique l'assemblage de couches et/ou des couches (11; 12; 13; 14; 18; 21; 27) individuelles de l'assemblage de couches par un dépôt de couches minces, notamment par un procédé de métallisation ou par un procédé de pulvérisation cathodique, ou par une technique en couches épaisses, notamment par un procédé de sérigraphie.

11. Procédé selon l'une quelconque des revendications 9 à 10,
**caractérisé**
**en ce qu'**on conçoit le passage (17) sous la forme d'un trou borgne et **en ce qu'**on ménage l'au moins un trou borgne ou un segment partiel du trou borgne dans l'assemblage de couches par au moins un procédé de gravure, notamment par un procédé de gravure ionique plasma, ou par plusieurs procédés de gravure réalisés successivement, qui sont adaptés aux couches (12; 14; 21) qui doivent être respectivement gravées de l'assemblage de couches.

12. Procédé selon la revendication 11,
**caractérisé**
**en ce que** la couche isolante (14) est conçue sous la forme d'une couche arrêtant le processus de gravure et **en ce que** dans une étape suivante, on ménage un segment partiel du trou borgne dans la couche isolante (14) par un procédé de recuit avec changement de phase de la couche isolante.

13. Procédé selon l'une quelconque des revendications 9 à 12,
**caractérisé**
**en ce qu'**on conçoit le passage (17) sous la forme d'un trou borgne et **en ce qu'**on ménage l'au moins un trou borgne ou un segment partiel du trou borgne dans l'assemblage de couches par un procédé d'usinage au laser, la source laser et/ou la longueur d'onde et/ou la fréquence d'impulsions du laser étant adaptée à la couche (12; 14; 21) qui doit être respectivement usinée de l'assemblage de couches.

14. Procédé selon la revendication 9,
**caractérisé**
**en ce que** lors de la fabrication de l'assemblage de couches, on génère la couche isolante (14) à pleine surface, notamment par un procédé de sérigraphie ou par un procédé de pulvérisation ou par un procédé d'immersion ou par un procédé de revêtement par centrifugation, entre la première surface d'électrode (12) et la deuxième surface d'électrode (13) et **en ce que** dans une étape de procédé suivante, on retire au moins un segment de la couche isolante (14), notamment par dissolution structurée ou par gravure ou par combustion, de sorte à créer le passage (17) s'étendant sur la première couche d'électrode (12) et la couche isolante (14).

15. Procédé, destiné à fabriquer un capteur (10) selon l'une quelconque des revendications 1 à 8, lors duquel on fabrique un assemblage de couches avec une première couche d'électrode (12), une deuxième couche d'électrode (13) et une couche isolante (14) placée entre la première couche d'électrode (12) et la deuxième couche d'électrode (13), la couche isolante (14) et la première couche d'électrode (12) étant structurées, notamment créées par un procédé d'enlèvement et/ou par un procédé au jet d'encre et/ou par un processus de poinçonnage, de sorte que suite à l'application structurée des couches (12; 14; 21) individuelles l'une sur l'autre, un passage (17) soit créé vers la deuxième couche d'électrode (13).
